# DEMANDE DE BREVET EUROPEEN

(11) **EP 2 299 075 A1**
(43) Date de publication de la demande: **23.03.2011**
(21) Numéro de dépôt: 10171030.9
(22) Date de dépôt: 28.07.2010
(51) Int. Cl.: F01N 3/022, F01N 3/033, F01N 3/08, B01D 46/24

(54) **Ligne d'échappement d'un moteur à combustion**

(30) Priorité: 22.09.2009 FR 0956494
(71) Demandeur: Peugeot Citroën Automobiles SA, 78140 Vélizy-Villacoublay (FR)
(72) Inventeur: Matthess, Nils, 92300, Levallois-Perret (FR); Fifis, Matthieu, 94170, Le-Perreux-sur-Marne (FR)

(57) **Abrégé**

L'invention porte sur une ligne d'échappement d'un moteur à combustion comportant un filtre à particules (4), **caractérisée en ce qu**'elle comporte en outre en amont du filtre à particules (4) un dispositif non catalytique de piégeage des cendres (8) par adsorption ne comportant pas d'élément mobile. L'invention porte également sur un ensemble constitué d'un moteur à combustion à allumage commandé et d'une ligne selon l'invention.

## Description

L'invention porte sur la dépollution des gaz d'échappement d'un moteur à combustion, et plus particulièrement à la réduction des matières particulaires présentes dans les gaz d'échappement. Elle s'applique en particulier aux moteurs de type Diesel et aux moteurs à allumage commandé de type injection directe.

Dans les moteurs dont la ligne d'échappement est dotée d'un filtre à particules, ce filtre piège généralement les particules de suies carbonnées, mais également un ensemble d'éléments non combustibles, que l'on appelle « cendres », et qui proviennent en partie d'espèces chimiques présentes dans l'huile de lubrification du moteur (Zn, Ca, P, etc.)

Un filtre à particule est en général régénéré périodiquement en ce qui concerne les suies qu'il contient. La régénération peut être active c'est-à-dire déclenchée volontairement par le contrôle moteur ou passive c'est-à-dire non déclenchée par le contrôle moteur mais se produisant lorsque les conditions de température et de teneur en espèces oxydantes sont réunies dans le filtre. Lors d'une régénération les suies sont éliminées par une élévation de température qui provoque leur oxydation ; les cendres, en tant que matière non combustible, ne sont en revanche jamais éliminées.

De fait, le dimensionnement d'un filtre à particules est souvent conditionné par la nécessité de pouvoir contenir une quantité donnée de cendres, entre chaque remplacement ou opération de maintenance du filtre. Or, un filtre à particule est un élément onéreux, dont le coût est en grande partie conditionné par le volume. En outre, un filtre de volume important est potentiellement problématique pour ce qui est de son implantation dans un véhicule automobile, notamment dans le sous-capot moteur. Enfin, un filtre de gros volume génère une contre-pression importante dans le circuit d'échappement du moteur, ce qui s'oppose à des performances et une consommation optimales du moteur.

Si le dimensionnement du filtre n'est pas adapté pour permettre le piégeage des cendres pendant toute la durée d'utilisation du moteur ou du véhicule équipé du moteur considéré, il est nécessaire de remplacer ou de nettoyer mécaniquement le filtre, par exemple à l'aide d'un jet d'eau à haute pression, suite au démontage du filtre. C'est une opération relativement complexe et coûteuse.

Dans le brevet EP1267047, il est proposé un système pour le piégeage des cendres, au moyen d'un dispositif filtrant chargé électromagnétiquement. Il s'agit cependant d'un dispositif complexe qui est en outre difficile à mettre en oeuvre dans un contexte automobile, car il nécessite un circuit électrique spécifique et un volume d'implantation conséquent.

L'invention résout ces problèmes en proposant un moyen de piégeage des cendres, simple, facile à implanter, et générant une faible contre-pression.

Plus précisément l'invention porte donc sur une ligne d'échappement d'un moteur à combustion comportant un filtre à particules, et comportant en outre en amont du filtre à particules un dispositif non catalytique de piégeage des cendres par adsorption ne comportant pas d'élément mobile. Le dispositif de piégeage des cendres offre une surface d'adsorption aux cendres, qui s'y fixent. Les cendres correspondent à un ensemble d'espèces chimiques imbrûlables (dans les conditions d'une ligne d'échappement), susceptibles d'être piégée par le filtre à particules, et généralement issues de l'huile de lubrification du moteur.

Dans une variante de l'invention, le dispositif de piégeage des cendres comporte un monolithe en céramique ou métallique, présentant, entre une face d'entrée et une face de sortie, des canaux ouverts à chacune de leurs extrémités. Le monolithe peut être formé de canaux pouvant être plus moins ouverts selon l'optimum recherché entre la capacité d'absorption du dispositif et la contre-pression générée. On notera que c'est avant tout la surface offerte par les canaux pour le dépôt des cendres qui est dimensionnante. Divers modes de réalisations sont envisageables : un monolithe céramique de petite taille, analogue dans sa constitution à un substrat de catalyseur d'oxydation, un monolithe métallique extrudé ou constitué par assemblage de tôles ondulées, etc. La surface totale constituée par l'ensemble des canaux et la forme de cet ensemble correspondront à la surface et à la forme de la ligne d'échappement à l'endroit où cet ensemble sera inséré de sorte que les gaz d'échappement issus du moteur traversent ce dispositif. D'autres modes de réalisation sont envisageables, par exemple un monolithe en mousse métallique.

De préférence, le monolithe présente une longueur de 3 à 6 centimètres. Cette longueur correspond à la longueur de la zone d'établissement du flux laminaire dans les canaux du substrat, lorsque le diamètre hydraulique des canaux est d'un millimètre environ. Or, l'absorption étant liée à l'impact du flux gazeux sur les parois, elle se produit principalement dans la zone où le flux est turbulent.

Dans une variante de l'invention, le dispositif de piégeage des cendres par adsorption comporte une grille métallique. Cela constitue une manière simple de réalisation de l'invention.

De préférence, le dispositif de piégeage des cendres par adsorption comporte une succession de grilles métalliques, les mailles de deux grilles successives étant non alignées. Cette solution permet la constitution d'un dispositif de piégeage des cendres par adsorption efficace, et pouvant générer une contre-pression minimale dans la ligne. En s'assurant que les mailles des grilles sont non alignées, le flux des gaz va impacter un maximum de surfaces offertes par la succession de grilles, ce qui augmente la capacité d'adsorption de l'ensemble.

Dans une variante de l'invention, le dispositif de piégeage présente une imprégnation augmentant la surface développée d'adsorption. En effet, l'adsorption sera d'autant facilitée que la surface offerte par le dispositif de piégeage est importante.

De préférence, l'imprégnation contient de l'alumine gamma. Une imprégnation à base de ce composant est peu onéreuse et permet d'augmenter considérablement la surface offerte à l'adsorption des poisons du catalyseur.

Dans une variante de l'invention, le dispositif de piégeage des cendres par adsorption comporte des ailettes augmentant la turbulence d'un flux gazeux le traversant. Cela augmente par conséquent son aptitude à capter les cendres. D'ailleurs, le dispositif peut essentiellement être constitué d'une ou plusieurs ailettes interposées dans le flux gazeux, les cendres se déposant alors à la surface des ailettes. Les ailettes sont alors positionnées de façon à ce que les gaz entrent en contact avec elles autant que possible sans toutefois augmenter de manière trop sensible la contre pression de la ligne d'échappement. La forme des ailettes n'est en soi fondamentale pour la réalisation de l'invention. Ces ailettes peuvent être constituées de tout matériau ayant les propriétés thermomécaniques pour supporter l'environnent dans la ligne d'échappement. La portion de ligne dans laquelle elles sont disposées peut être linéaire ou courbe sans que cela revête une grande importance en termes d'efficacité du dispositif.

Dans une variante de l'invention, la ligne d'échappement comporte en outre un catalyseur en aval du filtre à particules. Cette architecture de ligne prend tout son sens dans l'invention, la protection du filtre étant ainsi assurée par le dispositif de piégeage. Le catalyseur est en outre corolairement protégé par cette architecture.

Dans une variante de l'invention, la ligne d'échappement comporte en outre un catalyseur, entre le dispositif de piégeage des cendres et le filtre à particules. La protection du filtre est ainsi assurée par le dispositif de piégeage, et le catalyseur est en outre corolairement protégé par cette architecture, notamment contre des éléments susceptibles de l'empoisonner, issus de l'huile ou du carburant moteur.

De préférence, le filtre à particules présente une longueur d'au plus 15 cm. L'application préférentielle de l'invention porte sur les lignes des moteurs à allumage commandés, dans lesquelles des filtres relativement court peuvent être employés. L'invention permet cela, car le stockage des cendres dans le filtre n'est plus un paramètre dimensionnant de ce dernier. D'une manière générale, l'invention est néanmoins applicable tant à des moteurs Diesel qu'à allumage commandé, et présentant par exemple des filtres à particules catalysés.

L'invention porte également sur un ensemble constitué d'un moteur à combustion à allumage commandé et d'une ligne d'échappement selon l'invention.

L'invention est décrite plus en détail ci-après et en référence aux figures représentant schématiquement le système dans son mode de réalisation préférentiel.

La figure 1 présente un circuit de traitement et d'évacuation des gaz d'échappement d'un moteur, conforme à l'invention, selon une première configuration.

La figure 2 présente un circuit de traitement et d'évacuation des gaz d'échappement d'un moteur, conforme à l'invention, selon une deuxième configuration.

La figure 3 présente un circuit de traitement et d'évacuation des gaz d'échappement d'un moteur, conforme à l'invention, selon une troisième configuration.

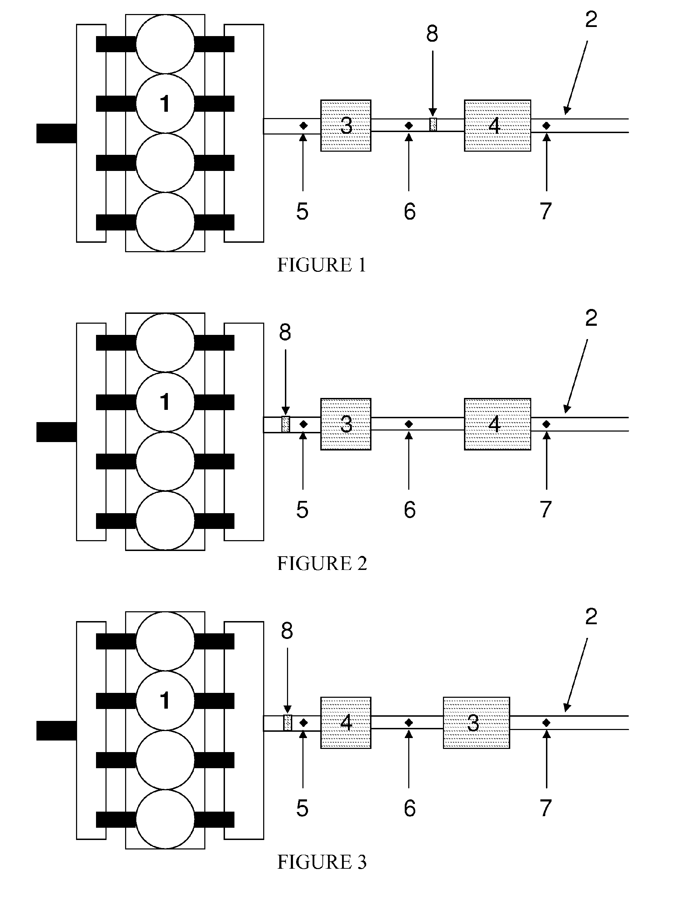

Sur le dispositif représenté en figure 1, un moteur 1 est équipé d'un circuit de traitement et d'évacuation de ses gaz d'échappement 2 comportant un catalyseur 3 et un filtre à particules 4. Le circuit 2 comporte en outre une première sonde à oxygène 5, une deuxième sonde à oxygène 6, et une troisième sonde à oxygène 7, qui servent à la régulation et au contrôle des moyens de post-traitement des gaz d'échappement. Dans la variante de l'invention ici représentée, un dispositif de piégeage des cendres 8 est disposé entre le catalyseur 3 et le filtre à particules 4.

Cette première architecture permet de positionner le dispositif de piégeage des cendres sous caisse et ainsi de le rendre accessible pour un démontage dans le cadre d'une maintenance. En outre, le catalyseur 3, situé en amont du dispositif de piégeage des cendres 8 et du filtre à particules 4 ne subit pas son inertie thermique, ce qui permet d'assurer un bon amorçage par une montée rapide en température, et donc une meilleure efficacité de traitement des gaz d'échappement.

Dans cette variante de l'invention, le dispositif de piégeage des cendres 8 est dimensionnellement peu contraint par son environnement. II peut ainsi voir sa longueur augmentée pour accroître son efficacité de récupération des cendres de l'huile sans impact négatif sur le catalyseur.

De préférence, dans cette variante de l'invention, le dispositif de piégeage des cendres 8 comprend un substrat à géométrie en « nid d'abeilles », et/ou présentant des canaux parallèles et orientés suivant la direction principale du flux des gaz d'échappement. Ce substrat en céramique de type cordiérite ou métallique (Fe-Cr-Al) présente un diamètre équivalent à celui du conduit d'échappement et une longueur comprise entre 3 et 6cm. Le dispositif de piégeage des cendres 8 peut également prendre la forme d'un dispositif de filtration comme, par exemple, une grille métallique interposée dans le conduit d'échappement.

Sur le dispositif représenté en figure 2, l'architecture générale du circuit de traitement et d'évacuation des gaz d'échappement est analogue à celle du circuit de la figure 1. Cependant, le dispositif de piégeage des cendres 8 est disposé en amont du catalyseur 3. Cette configuration présente l'avantage de protéger non seulement le filtre à particules 4 mais aussi le catalyseur 3 d'un empoisonnement lié aux espèces chimiques présentes dans l'huile de lubrification du moteur 1. Ainsi la durabilité de l'ensemble du système de post-traitement est améliorée.

Dans cette configuration, on dispose préférentiellement le catalyseur et le dispositif de piégeage des cendres sous le collecteur, dans le sous-capot moteur. De préférence, on dimensionne le dispositif de piégeage des cendres 8 pour atteindre la durabilité exigible du système de dépollution. Le dispositif de piégeage des cendres 8 étant peu volumineux, il est également possible de le placer dans le collecteur pour réduire les pertes thermiques. Dans ce cas et de préférence, le dispositif de piégeage des cendres 8, très contraints thermiquement, est métallique.

De préférence, dans cette variante de l'invention, le dispositif de piégeage des cendres 8 comprend un substrat à géométrie en « nid d'abeilles », et/ou présentant des canaux parallèles et orientés suivant la direction principale du flux des gaz d'échappement. Ce substrat en céramique de type cordiérite ou métallique (Fe-Cr-Al) si placé dans le collecteur, présente un diamètre équivalent à celui du conduit d'échappement et une longueur comprise entre 3 et 6 cm. La solution comprenant un substrat métallique est particulièrement adaptée si le dispositif de piégeage des cendres 8 est positionné dans le collecteur d'échappement du moteur 1. Le dispositif de piégeage des cendres 8 peut également prendre la forme d'un dispositif de filtration comme, par exemple, une grille métallique interposée dans le conduit d'échappement.

Sur le dispositif représenté en figure 3 le circuit de traitement et d'évacuation des gaz d'échappement du moteur 1 présente, selon le sens d'écoulement des gaz d'échappement, un dispositif de piégeage des cendres 8, un filtre à particule 4, et un catalyseur 3. Dans une autre variante, les fonctions de filtration des particules et de catalyse peuvent être réalisées par un substrat unique (filtre à particule présentant une imprégnation catalytique).

Cette architecture est favorable à des régénérations aisées du filtre à particules 4, notamment car il ne subit pas les effets de l'inertie thermique du catalyseur et que les gaz d'échappement ne sont pas appauvris en oxygène par le catalyseur avant de pénétrer dans le filtre à particules.

Le dispositif de piégeage des cendres 8 assure par son positionnement une protection de l'ensemble des moyens de traitement du circuit de traitement et d'évacuation des gaz d'échappement. De préférence, on dimensionne le dispositif de piégeage des cendres 8 pour atteindre la durabilité exigible du système de dépollution

De préférence, dans cette variante de l'invention, le dispositif de piégeage des cendres 8 comprend un substrat à géométrie en « nid d'abeilles », et/ou présentant des canaux parallèles et orientés suivant la direction principale du flux des gaz d'échappement. Ce substrat en céramique de type cordiérite ou métallique (Fe-Cr-Al), présente un diamètre équivalent à celui du conduit d'échappement et une longueur comprise entre 3 et 6 cm. Le dispositif de piégeage des cendres 8 peut également prendre la forme d'un dispositif de filtration comme, par exemple, une grille métallique interposée dans le conduit d'échappement.

Quelle que soit la configuration retenue, lorsque le moteur fonctionne et émet en même temps que des particules des éléments d'huile imbrûlés, le dispositif de piégeage des cendres collecte par adsorption les éléments issus de l'huile, tout en laissant le filtre à particules traiter les suies.

L'inventeur a constaté que, dans le cadre d'un circuit d'échappement classique tel que connu dans l'art antérieur et présentant un catalyseur en tant que premier dispositif de post-traitement dans le circuit, le substrat du catalyseur est empoisonné par des éléments issus de l'huile majoritairement dans les premiers centimètres suivant sa face d'entrée.

En effet, ces éléments (par exemple le phosphore, le zinc ou le calcium) ont une aptitude à s'adsorber sur toute surface physique, de façon plus ou moins aisée selon l'affinité entre ces éléments et la surface considérée. Cependant, si le catalyseur réduit la partie soluble des particules de suies en la convertissant, il n'agit pas ou très peu sur leur nombre. Les particules ne pourront alors être collectées que dans le filtre à particules.

Ainsi, le dispositif de piégeage des cendres qui peut être constitué d'un substrat en cordiérite (structure en nid d'abeilles typique du post-traitement automobile) ou métallique (Fe-Cr-Al) non imprégné pourrait capter par adsorption les cendres tout en laissant passer les particules de suies. II est également possible de prévoir sur ce substrat une imprégnation contenant des composants améliorant l'adsorption des éléments issus de l'huile.

Dans cette variante, la différence par rapport à un catalyseur de post-traitement classique est que l'imprégnation portée par le substrat ne contient pas de métaux précieux. En outre, puisque la longueur du substrat est peu dimensionnante au-delà de quelques centimètres, on sélectionne un substrat court. L'inventeur a constaté que, pour une application automobile classique, la longueur idéale d'un tel substrat pour constituer le dispositif de piégeage des cendres est de l'ordre de 3 à 6 cm. Cette longueur correspond à la longueur de la zone d'établissement du flux laminaire dans les canaux du substrat, lorsque le diamètre hydraulique des canaux est d'un millimètre environ.

Sur cette longueur de quelques centimètres, le flux gazeux est encore turbulent, et au-delà il devient laminaire. Cette zone d'établissement du flux laminaire est la zone dans laquelle les échanges thermiques comme les échanges de matières sont les plus importants. Ainsi la probabilité que les éléments imbrûlés de l'huile impactent les parois des canaux est maximale. C'est donc dans cette zone que les éléments susceptibles de générer des cendres (notamment P, Ca et Zn) vont préférentiellement s'adsorber à la surface des parois.

La densité de cellules du substrat est à définir en fonction de la contre-pression supplémentaire admissible. Evidemment, plus le diamètre hydraulique des canaux du substrat est petit (et donc la densité cellulaire importante), plus son aptitude à capter les cendres est grande. L'inventeur a constaté qu'une densité cellulaire de 600 CPSI (cells per square inch, c'est-à-dire le nombre de canaux par pouce carré) est adaptée à une application automobile classique mais d'autres densités cellulaires peuvent être également employées.

Pour améliorer l'efficacité d'un tel dispositif, il est en outre possible d'accroître la surface développée des parois du support mécanique en ajoutant une imprégnation dans le substrat. Cette imprégnation peut être de l'alumine seule. L'alumine γ par sa très grande porosité peut adsorber une quantité significative d'éléments issus de l'huile. Un autre avantage de l'alumine γ est d'être inerte vis-à-vis de l'oxygène des gaz dont le filtre a besoin pour sa régénération. Enfin cette imprégnation qui ne contient ni oxydes mixtes ni métaux précieux est une solution peu onéreuse. Une telle imprégnation peut également être employée pour améliorer l'adsorption des cendres, dans d'autres modes de réalisation du dispositif de piégeage des cendres.

Cette solution présence l'avantage d'être robuste par rapport aux conditions de fonctionnement d'un moteur, d'être peu encombrante, peu coûteuse et surtout d'être durable (pas de nettoyage ni de remplacement à prévoir). Cette solution est optimale si le filtre à particules est en amont du catalyseur.

Dans la configuration inverse, le catalyseur en s'empoisonnant jouerait le rôle de collecteur de cendres. En positionnant alors le dispositif de piégeage des cendres en amont du catalyseur, on limite l'empoisonnement de ce dernier, ce qui améliore sa durabilité.

Dans une autre variante de l'invention, le dispositif de piégeage des cendres peut être constitué d'un dispositif de filtration interposé dans le conduit d'échappement. Ce dispositif de filtration est dessiné de sorte à offrir une surface qui favorise l'adsorption des cendres. II peut ainsi prendre des formes diverses et comporter des matériaux très différents. II peut se présenter sous la forme d'une grille métallique insérée dans une pièce également métallique cylindrique et de diamètre correspondant à celui de la ligne d'échappement. De préférence, cette pièce est facilement démontable pour son nettoyage ou son remplacement. Plusieurs systèmes bien connus permettent un démontage facile tout en garantissant une bonne étanchéité au système.

La grille métallique ainsi constituée présente un diamètre équivalent à celui du conduit d'échappement et d'une longueur comprise entre 0,2 et 2 cm. Mais plus que la longueur, c'est la géométrie et notamment l'OFA (Open Fraction Area) qui est le paramètre essentiel pour la capture des espèces solides comme P, Ca, Zn, et les particules. En effet, cette grille va en partie agir tel un impacteur sur ces espèces solides. Son matériau de constitution importe peu, au-delà des exigences auxquelles il doit répondre en termes de tenue thermomécanique. L'efficacité de piégeage des cendres dépend étroitement du maillage du dispositif de filtration, plus ou moins serré et proposant une OFA plus ou moins importante.

La géométrie de cette grille est optimisée en fonction de la contre-pression engendrée (la contrepartie d'une faible porosité est une contre-pression importante et le risque de collecter en plus des cendres les particules de suie les plus grosses), de l'intervalle de remplacement escompté, de l'efficacité à capter les cendres, etc.. Cette grille métallique peut être fixe ou bien encore rotative, par exemple en forme d'ailettes pour améliorer la turbulence et l'efficacité à capter les cendres.

Il est avantageux de placer ce dispositif de filtration en amont du catalyseur qui est lui-même en amont du filtre à particules 4. Les cendres sont alors plus grasses et donc plus facilement collectées par ce dispositif de filtration. L'autre avantage de cette configuration est de réduire l'empoisonnement du catalyseur par ces éléments, le phosphore étant le principal poison des phases catalytiques.

Selon cette variante de l'invention, la grille sera colmatée par les éléments issus de l'huile mais aussi par les plus grosses particules de suie au fur et à mesure de l'utilisation du véhicule. C'est pour cette raison qu'il faut prévoir son nettoyage ou son remplacement à une fréquence déterminée par l'intervalle de maintenance du véhicule. La porosité de cette grille peut être optimisée pour laisser passer une certaine quantité d'éléments issus de l'huile afin qu'elle mette plus de temps à se colmater. Mais dans ce cas, une certaine quantité de cendres se stockera dans le filtre à particules.

L'adoption d'un circuit d'échappement selon l'invention comportant des moyens qui permettent de limiter la quantité de cendres dans le filtre à particules dé-contraint significativement son dimensionnement. En empêchant les cendres de l'huile moteur d'atteindre le filtre à particules, on peut réduire au maximum son volume et par conséquent sa contre-pression.

En permettant une réduction du volume du filtre à particules, et comme un dispositif constitué selon l'invention engendre une très faible pression, l'invention permet des gains en contre-pression générée dans le circuit d'échappement du moteur, ce qui offre des gains en performance et en consommation. L'invention permet en outre d'accroître la durabilité du filtre à particules, et se montre peu contraignante sur l'architecture du véhicule équipé.

Dans un dispositif selon l'invention, le dispositif de piégeage des cendres situé en amont du filtre à particules peut être positionné sous caisse. II peut également être positionné dans le sous capot moteur, par exemple dans le collecteur d'échappement du moteur. II peut être positionné en amont ou en aval d'un catalyseur, le seul impératif étant de le positionner en amont du filtre à particules. Un circuit d'échappement selon l'invention est applicable tant en essence qu'en Diesel.

Les gains offerts par l'invention sont donc multiples, et l'on peut relever notamment,
- Une réduction du volume du filtre à particules des moteurs à allumage commandé mais aussi Diesel engendrant des gains coût pièce
- Une réduction du volume du filtre à particules engendrant une réduction de la contre-pression et donc de la consommation (et/ou amélioration des performances)
- Une augmentation de la durabilité du filtre à particules

## Revendications

1. Ligne d'échappement d'un moteur à combustion comportant un filtre à particules (4), **caractérisée en ce qu'**elle comporte en outre en amont du filtre à particules (4) un dispositif non catalytique de piégeage des cendres (8) par adsorption ne comportant pas d'élément mobile.

2. Ligne d'échappement selon la revendication 1, **caractérisée en ce que** le dispositif de piégeage des cendres (8) comporte un monolithe en céramique ou métallique, présentant, entre une face d'entrée et une face de sortie, des canaux ouverts à chacune de leurs extrémités.

3. Ligne d'échappement selon la revendication 2, **caractérisée en ce que** le monolithe présente une longueur de 3 à 6 centimètres.

4. Ligne d'échappement selon la revendication 1, **caractérisée en ce que** le dispositif de piégeage des cendres (8) par adsorption comporte une grille métallique.

5. Ligne d'échappement selon la revendication 4, **caractérisée en ce que** le dispositif de piégeage des cendres par adsorption comporte une succession de grilles métalliques, les mailles de deux grilles successives étant non alignées.

6. Ligne d'échappement selon l'une quelconque des revendications précédentes, **caractérisée en ce que** le dispositif de piégeage (8) présente une imprégnation augmentant la surface développée d'adsorption.

7. Ligne d'échappement selon la revendication 6, **caractérisée en ce que** l'imprégnation contient de l'alumine gamma.

8. Ligne d'échappement selon l'une quelconque des revendications précédentes, **caractérisée en ce que** le dispositif de piégeage des cendres (8) par adsorption comporte des ailettes augmentant la turbulence d'un flux gazeux le traversant.

9. Ligne d'échappement selon l'une quelconque des revendications précédentes, **caractérisée en ce qu'**elle comporte en outre un catalyseur (3) en aval du filtre à particules.

10. Ligne d'échappement selon l'une quelconque des revendications 1 à 8, **caractérisée en ce qu'**elle comporte en outre un catalyseur (3), entre le dispositif de piégeage des cendres (8) et le filtre à particules (4).

11. Ligne d'échappement selon l'une quelconque des revendications précédentes, **caractérisée en ce que** le filtre à particules (4) présente une longueur d'au plus 15 cm.

12. Ensemble constitué d'un moteur à combustion à allumage commandé (1) et d'une ligne d'échappement selon l'une quelconque des revendications précédentes.
